# EUROPÄISCHE PATENTSCHRIFT

(11) **EP 2 825 430 B1**
(45) Veröffentlichungstag und Bekanntmachung des Hinweises auf die Patenterteilung: **17.10.2018**
(21) Anmeldenummer: 13712134.9
(22) Anmeldetag: 15.03.2013
(51) Int. Cl.: B60T 7/12, B60T 8/17, B60T 8/171, B60T 8/172, B60T 8/32, B60T 17/22

(54) **VERFAHREN ZUM STEUERN EINER EINE REIBUNGSBREMSE AUFWEISENDEN ANTRIEBS- UND BREMSEINRICHTUNG EINES FAHRZEUGS**
METHOD FOR CONTROLLING A DRIVE AND BRAKE DEVICE OF A VEHICLE HAVING A FRICTION BRAKE
PROCÉDÉ DE COMMANDE D'UN SYSTÈME D'ENTRAÎNEMENT ET DE FREINAGE D'UN VÉHICULE, COMPORTANT UN FREIN À FRICTION

(30) Priorität: 15.03.2012 DE 102012005068
(43) Veröffentlichungstag der Anmeldung: 21.01.2015
(73) Patentinhaber: KNORR-BREMSE Systeme für Schienenfahrzeuge GmbH, 80809 München (DE)
(72) Erfinder: AURICH, Stefan, 86316 Friedberg (DE); GOBIN, Marie-Christine, 85221 Dachau (DE)
(86) Internationale Anmeldenummer: PCT/EP2013/000806
(87) Internationale Veröffentlichungsnummer: WO 2013/135393

(56) Entgegenhaltungen:
- EP-A1- 1 506 900
- EP-A2- 2 030 855
- EP-A2- 2 133 254
- WO-A1-01/92076
- WO-A2-2010/069520
- DE-A1- 3 311 041
- DE-A1- 19 510 755
- DE-A1- 19 755 112
- US-B1- 6 263 266

## Beschreibung

Die Erfindung betrifft ein Verfahren zum Steuern einer eine Reibungsbremse aufweisenden Antriebs- und Bremseinrichtung eines Fahrzeugs gemäß dem Oberbegriff von Anspruch 1 sowie eine Reibungsbremse aufweisende Antriebs- und Bremseinrichtung eines Fahrzeugs gemäß dem Oberbegriff von Anspruch 9.

Bei außergewöhnlicher Beanspruchung können Reibpartner von Reibungsbremsen wie Bremsbeläge, Bremsklötze und Bremsscheiben thermisch überlastet werden. Bei Schienenfahrzeugen ist eine thermische Grenze der Reibungsbremse beispielsweise dadurch gegeben, dass die Reibungsbremse in der Regel nicht mehr als zwei Schnellbremsungen in der Ebene verkraften. Diese Beanspruchung wird normalerweise durch die Reibungsbremse ertragen, ohne dass sie zu Fading oder übermäßigem Verschleiß neigt.

Unter besonderen Umständen, z.B. Bremsungen im Gefälle oder Bremsungen mit nur teilweise verfügbaren Bremssystemen in einem Zugverband, können die Reibpartner der Reibungsbremsen durch den erhöhten Energieeintrag überlastet werden, die zu hohen Reibflächentemperaturen und damit zu großem Verschleiß sowie Fading führt, was letztlich stark verlängerte Bremswege zur Folge hat.

Um nachlassende Bremswirkung oder übermäßigen Verschleiß einer Reibungsbremse zu vermeiden, wird in der DE 10 2010 020 495 A1 beschrieben, die Ist-Temperaturen von Bremsenbauteilen zu überwachen und mit vorgegebenen Grenztemperaturen zu gleichen, um bei Überschreiten der Grenztemperaturen durch die gemessenen Ist-Temperaturen ein Warnsignal zu erzeugen. Weiterhin sind aus dem Stand der Technik Simulationsmodelle bekannt, mit denen die Ist-Temperaturen von Bremsenbauteilen auf der Basis von Brems- und Fahrdaten abgeschätzt werden können. Beide Verfahren haben den Nachteil, dass sie nur mit einem gewissen Aufwand betrieben werden können.

In EP 2 030 855 A2 wird ein Verfahren zum Prüfen der Wirksamkeit einer mechanischen Bremse eines Schienenfahrzeugs vorgeschlagen, bei dem während einer Fahrt des Schienenfahrzeugs mit konstanter Geschwindigkeit die mechanische Bremse betätigt wird, so dass eine automatische Geschwindigkeitsregelung des Schienenfahrzeugs versucht, die Bremskraft der mechanischen Bremse durch eine erhöhte Antriebskraft auszugleichen, um die Geschwindigkeit weiterhin konstant zu halten, wobei aus der Antriebskraft die Wirksamkeit der mechanischen Bremse ermittelt wird.

Gemäß EP 2 133 254 A2 wird ein Verfahren für ein Schienenfahrzeug zur Anforderung von Sicherheitsreaktionen vorgestellt, bei dem ein Zustand, in dem eine Sicherheitsreaktion erfolgen soll, erkannt, die Sicherheitsreaktion durch ein Gerät angefordert und die erfolgte Sicherheitsreaktion an das anfordernde Gerät rückgemeldet wird, wobei bei nicht erfolgter Sicherheitsreaktion in eine Sicherheitsschleife zum Auslösen der gewünschten Sicherheitsreaktion eingegriffen wird.

Ein gattungsgemäßes Verfahren zum Steuern einer eine Reibungsbremse aufweisenden Antriebs- und Bremseinrichtung eines Fahrzeugs und eine gattungsgemäße eine Reibungsbremse aufweisende Antriebs- und Bremseinrichtung eines Fahrzeugs sind in EP 1 506 900 A1 offenbart.

Die Aufgabe der Erfindung besteht darin, ein Verfahren zum Steuern einer eine Reibungsbremse aufweisenden Antriebs- und Bremseinrichtung eines Fahrzeugs und eine eine Reibungsbremse aufweisende Antriebs- und Bremseinrichtung eines Fahrzeugs derart weiter zu bilden, dass eine Überlastung der Reibungsbremse auf einfache und zuverlässige Art vermieden wird.

Diese Aufgabe wird erfindungsgemäß durch die Merkmale der Patentansprüche 1 und 9 gelöst.

### Offenbarung der Erfindung

Das Verfahren basiert auf dem Gedanken, dass bei einer bis in den Stillstand des Fahrzeugs und unter zumindest teilweisem Einsatz der Reibungsbremse erfolgten Stillstands-Bremsung der bei dieser Stillstands-Bremsung zurückgelegte Bremsweg erfasst wird. Erfindungsgemäß wird der erfasste Bremsweg mit einem für diese Stillstands-Bremsung erwarteten Bremsweg verglichen, wobei abhängig von einem Überschreiten einer vorgegebenen Abweichung zwischen dem bei dieser Stillstands-Bremsung erfassten Bremsweg und dem bei dieser Stillstands-Bremsung erwarteten Bremsweg wenigstens für die auf die Stillstands-Bremsung nachfolgende Fahrt des Fahrzeugs die Fahrgeschwindigkeit auf eine vorgegebene Höchstgeschwindigkeit beschränkt wird, wobei die vorgegebene Höchstgeschwindigkeit niedriger als eine von dem Fahrzeug maximal erzielbare Höchstgeschwindigkeit oder als eine für die befahrene Strecke geltende Höchstgeschwindigkeit ist.

Die Antriebs- und Bremseinrichtung weist Erfassungs-Mittel zur Erfassung des bei einer bis in den Stillstand des Fahrzeugs und unter zumindest teilweisem Einsatz der Reibungsbremse erfolgten Stillstands-Bremsung zurückgelegten Bremswegs auf. Erfindungsgemäß sind Steuer-Mittel zum Vergleichen des erfassten, bei der Stillstands-Bremsung zurückgelegten Bremswegs mit einem für diese Stillstands-Bremsung erwarteten Bremsweg und zum Berechnen einer Abweichung zwischen dem bei der Stillstands-Bremsung erfassten Bremsweg und dem bei der Stillstands-Bremsung erwarteten Bremsweg auf, wobei die Steuer-Mittel ausgebildet sind, dass sie abhängig von einem Überschreiten einer vorgegebenen Abweichung zwischen dem bei der Stillstands-Bremsung erfassten Bremsweg und dem bei der Stillstands-Bremsung erwarteten Bremsweg wenigstens für die auf die Stillstands-Bremsung nachfolgende Fahrt des Fahrzeugs die Fahrgeschwindigkeit auf eine vorgegebene Höchstgeschwindigkeit beschränken, wobei die vorgegebene Höchstgeschwindigkeit niedriger als eine von dem Fahrzeug maximal erzielbare Höchstgeschwindigkeit oder als eine für die befahrene Strecke geltende Höchstgeschwindigkeit ist.

Mit anderen Worten wird der Stillstands-Bremsweg bei einer Stillstands-Bremsung überwacht und mit einem für diese Stillstands-Bremsung, d.h. für eine Stillstands-Bremsung aus der vorliegenden Ausgangsgeschwindigkeit erwarteten Stillstands-Bremsweg verglichen, der den Normalzustand einer Bremsung, d.h. übliche Beladung des Fahrzeugs, ordnungsgemäß funktionierende Bremssysteme, Bremsung in der Ebene charakterisiert. Bei Bremsungen im Gefälle und/oder mit Überlast und/oder mit ausgeschalteten oder nicht funktionsfähigen Teilsystemen der Bremsanlage (z.B. generatorische Bremse) verlängert sich der Bremsweg und der Energieeintrag in die Reibpartner der Reibungsbremse erhöht sich.

Wird die vorgegebene Abweichung des erfassten Bremswegs von dem vorgegebenen Bremsweg als Toleranzgrenze überschritten, wird als Resultat eine beispielsweise temporäre Begrenzung der Höchstgeschwindigkeit des Fahrzeugs automatisch durchgeführt. Die Begrenzung der Höchstgeschwindigkeit erfolgt dabei automatisch, d.h. durch entsprechende elektrische Signale eines Steuergeräts hin.

Dies kann beispielsweise durch entsprechende, in ein Steuergerät der Antriebsmaschine vom Steuergerät eingesteuerte Befehle durchgeführt werden. Dadurch erhalten die Bremsenbauteile der Reibungsbremse wie Bremsscheiben und Bremsbeläge ausreichend Zeit, wieder abzukühlen und vor der nächsten Bremsung wieder ein normales Temperaturniveau zu erreichen.

Der Wert der beispielsweise temporär vorgegebenen Höchstgeschwindigkeit des Fahrzeugs kann von der Abweichung des erfassten Bremswegs vom erwarteten Bremsweg abhängen, wobei diese Abhängigkeit beispielsweise in einem Kennfeld abgelegt ist.

Ebenso kann der für die Stillstands-Bremsung erwartete Bremsweg abhängig von Fahrdaten und/oder Fahrzeugdaten wie von der unmittelbar vor der Stillstands-Bremsung vorliegenden Fahrzeuggeschwindigkeit und/oder vom Fahrzeuggewicht kennfeldartig festgelegt werden.

"Unter zumindest teilweisem Einsatz der Reibungsbremse" ist zu verstehen, dass die Reibungsbremse bei der Stillstands-Bremsung wenigstens beteiligt ist, beispielsweise im Rahmen eines Bremsenblendings, bei welchem zusätzlich eine weitere Bremsenart wie etwa eine generatorische Bremse zum Einsatz kommt. Darüber hinaus beinhaltet dies natürlich auch den Fall, in dem die Stillstands-Bremsung ausschließlich durch die Reibungsbremse vonstatten geht.

Unter "wenigstens für die auf die Stillstands -Bremsung nachfolgende Fahrt des Fahrzeugs" ist zumindest die unmittelbar auf den durch die Stillstands -Bremsung hervorgerufenen Stillstand folgende Fahrt des Fahrzeugs zu verstehen. Aber auch für sich an diese Fahrt anschließende Fahrten kann die Fahrgeschwindigkeitsbeschränkung auf die vorgegebene Höchstgeschwin-digkeit durchgeführt werden.

Die vorgegebene Höchstgeschwindigkeit des Fahrzeugs, auf welche die Fahrgeschwindigkeit des Fahrzeugs bei der auf die Stillstandsbremsung nachfolgenden Fahrt beschränkt wird, legt der Fachmann individuell an Erfahrungswerten fest, von denen sich gezeigt hat, dass sie bei nachfolgenden Bremsungen keine weitere Verschleiß- oder Fading- Belastung der Reibungsbremsen hervorrufen kann.

Der bei der Stillstands-Bremsung ausgehend vom Fahrzustand bis zum Stillstand durchfahrene Bremsweg kann auf einfache Weise, z.B. durch Beobachtung von Radgeschwindigkeitssignalen erfasst werden, wobei solche Radgeschwindigkeitssignale von Radgeschwindigkeitssensoren ausgegeben werden, welche bei vielen Fahrzeugen ohnehin vorhanden sind.

Insgesamt ergibt sich gegenüber der aus dem Stand bekannten Temperaturüberwachung von Bremsenbauteilen bzw. Modellen, welche diese Temperatur abschätzen, eine sehr einfache Ausführung.

Durch die in den Unteransprüchen aufgeführten Maßnahmen sind vorteilhafte Weiterbildungen und Verbesserungen der in Anspruch 1 angegebenen Erfindung möglich.

Besonders bevorzugt erfolgt die automatische Beschränkung der Fahrgeschwindigkeit auf die vorgegebene Höchstgeschwindigkeit nur während einer vorgegebenen Zeitspanne, also temporär. Diese vorgegebene Zeitspanne bildet einen Erfahrungswert, der beispielsweise auch abhängig von dem Ausmaß des Überschreitens der vorgegebenen Abweichung zwischen dem bei der Stillstands-Bremsung erfassten Bremsweg und dem bei der Stillstands-Bremsung erwarteten Bremsweg ist.

Gemäß einer Weiterbildung wird die Anzahl von erfolgten Beschränkungen der Fahrgeschwindigkeit des Fahrzeugs auf die vorgegebene Höchstgeschwindigkeit als Datensatz in einem auslesbaren Speicher gespeichert, wobei dieser Datensatz aus dem Speicher z.B. anlässlich einer Wartung des Fahrzeugs auslesbar ist. Da diese Anzahl auf das Ausmaß von außergewöhnlichen Belastungen der Reibungsbremse des Fahrzeugs hinweist, können beispielsweise dann der Verschleißzustand der Reibungsbremse überprüft und gegebenenfalls verschlissene Bremsenbauteile ausgetauscht werden.

Die Steuer-Mittel, welche von den Erfassungsmitteln wie Raddrehzahlsensoren die Information über den bei der Stillstands-Bremsung zurückgelegten Bremsweg erhalten, beinhalten insbesondere ein oder mehrere Steuergeräte der Antriebs- und Bremseinrichtung des Fahrzeugs, welche zu diesem Zweck miteinander kommunizieren. Dabei kann beispielsweise das Steuergerät der Antriebseinrichtung von dem Steuergerät der Bremseinrichtung, welches die Signale der Raddrehzahlsensoren auch im Laufe der Stillstands-Bremsung empfängt und aus diesen Signalen den Stillstands-Bremsweg errechnet, den Befehl zum Beschränken der Höchstgeschwindigkeit automatisch erhalten.

Besonders bevorzugt wird das erfindungsgemäße Verfahren zum Steuern einer wenigstens eine Reibungsbremse aufweisenden Antriebs- und Bremseinrichtung eines Schienenfahrzeugs heranzogen. Bei Schienenfahrzeugen führen insbesondere Notbremsungen oder Schnellbremsungen zu erhöhtem Verschleiß der Reibungsbremsen, so dass insbesondere solche Notbremsungen oder Schnellbremsungen als hinsichtlich des Bremswegs zu beobachtende Stillstands-Bremsungen im Sinne der Erfindung darstellen.

Ein solches Schienenfahrzeug oder spurgebundenes Fahrzeug im Fernverkehr weist meist eine pneumatische oder elektro-pneumatische Reibungsbremse als direkt oder indirekt wirkende Bremse auf.

Unter einer "Schnellbremsung" wird dabei eine Bremsung verstanden, bei der beispielsweise eine Hauptluftleitung durch den Triebfahrzeugführer rasch und vollständig über die Schnellbremsstellung des Führerbremsventils entlüftet wird. Dabei wird die maximale Bremswirkung wie bei einer Vollbremsung, jedoch in kürzest möglicher Zeit, erreicht.

Bei "Notbremsungen" werden Führernotbremsungen und Fahrgastnotbremsungen unterschieden. Die Führernotbremsung ist eine Schnellbremsung, die vom Triebwagenführer über ein vom Führerbremsventil unabhängiges Notbremsventil eingeleitet wird. Die Fahrgastnotbremsung ist eine Bremsung, die vom Fahrgast über einen Notbremszugkasten, der auf ein Notbremsventil wirkt, eingeleitet wird.

Bevorzugt wird für gleitschutzgeregelte Notbremsungen oder gleitschutzgeregelte Schnellbremsungen von Schienenfahrzeugen keine Beschränkung der Höchstgeschwindigkeit durchgeführt, d.h. bei Bremsungen, bei denen die Gleitschutzregelung aufgrund eines unzulässigen Bremsschlupfes aktiviert werden muss, weil Gleitschutzauslösungen generell zu Bremswegverlängerungen führen. Eine solche Bremswegverlängerung hat in der Regel ihre Ursache nicht in einer höheren Belastung der Reibungsbremse. Bremswegverlängerungen aufgrund von Gleitschutzauslösungen werden daher im Rahmen der Erfindung vorzugsweise nicht einbezogen.

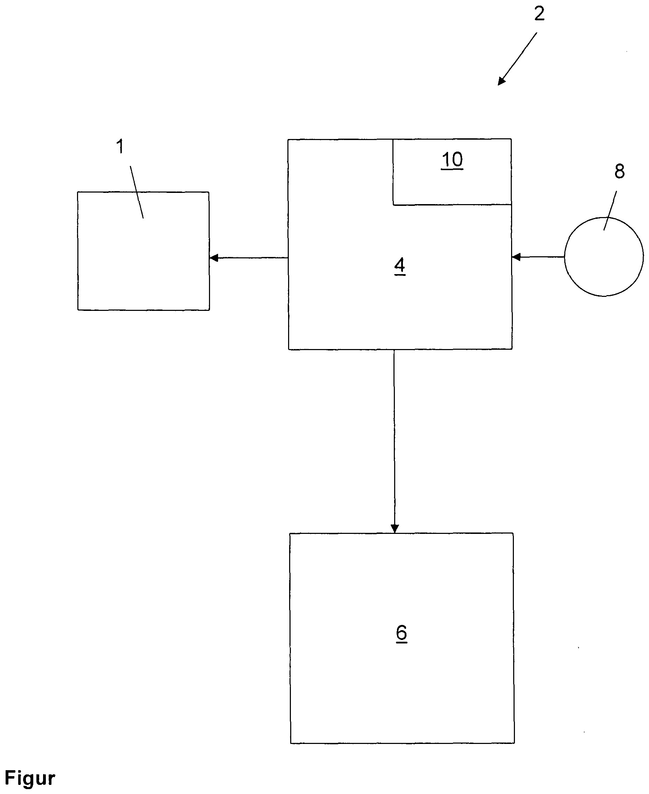

Weitere die Erfindung verbessernde Maßnahmen werden nachstehend in der Beschreibung von Ausführungsbeispielen der Erfindung und in der Zeichnung näher dargestellt.

### Zeichnung

Nachstehend sind Ausführungsbeispiele der Erfindung in der Zeichnung dargestellt und in der nachfolgenden Beschreibung näher erläutert. In der Zeichnung zeigt die einzige Figur eine schematische Darstellung einer Brems- und Antriebseinrichtung eines Schienenfahrzeugs gemäß einer bevorzugten Ausführungsform der Erfindung.

### Beschreibung von Ausführungsbeispielen

Am Beispiel einer eine Reibungsbremse 1 aufweisenden Antriebs- und Bremseinrichtung 2 eines im Fernverkehr eingesetzten Schienenfahrzeugs oder spurgebundenen Fahrzeugs sei im Folgenden die Erfindung beispielhaft erläutert. Die Bremseinrichtung des Schienenfahrzeugs als eigenständiger Teil der Antriebs- und Bremseinrichtung weist eine pneumatische oder elektro-pneumatische Reibungsbremse als direkt oder indirekt wirkende Bremse auf, welche von einem Bremssteuergerät 4 gesteuert wird. Zusätzlich kann sie auch eine hier nicht weiter interessierende generatorische Bremse umfassen. Weiterhin weist die Antriebs- und Bremseinrichtung 2 auch eine eigenständige Antriebseinrichtung mit zugehörigem Antriebssteuergerät 6 auf.

Mit der Bremseinrichtung können unter wenigstens teilweisem Einsatz der Reibungsbremse neben einer Betriebsbremsung und Vollbremsung auch eine bereits zuvor erläuterte Schnellbremsung sowie ebenfalls bereits zuvor erläuterte Notbremsung durchgeführt werden. Bei solchen in kürzester Zeit durchzuführenden Bremsungen, zu welchen auch eine Vollbremsung zählen kann, setzt die zum Aufbau von nennenswerter Bremskraft eine gewisse Zeit benötigende generatorische Bremse meist zu langsam ein, weshalb bei solchen Bremsungen die schnellere Reibungsbremse bevorzugt zum Einsatz kommt.

Das Verfahren zur Steuerung der Antriebs- und Bremseinrichtung 2 des Schienenfahrzeugs basiert auf dem Gedanken, dass bei einer bis in den Stillstand des Schienenfahrzeugs und unter zumindest teilweisem Einsatz der Reibungsbremsen erfolgten Stillstands-Bremsung wie bei einer Schnellbremsung oder Notbremsung zunächst der bei dieser Stillstands-Bremsung zurückgelegte Bremsweg erfasst wird. Als Bremsweg oder Stillstands-Bremsweg wird dabei die vom Schienenfahrzeug zurückgelegte Fahrstrecke angesehen, welche das Schienenfahrzeug vom Zeitpunkt des Auslösens des Schnellbrems- oder Notbremssignals, bei dem sich das Schienenfahrzeug mit einer gewissen Geschwindigkeit bewegt, bis zum Stillstand des Schienenfahrzeugs zurücklegt.

Der bei der Stillstands-Bremsung ausgehend vom Fahrzustand bis zum Stillstand vom Schienenfahrzeug durchfahrene Bremsweg wird bevorzugt durch Beobachtung von Radgeschwindigkeitssignalen erfasst, welche von den Rädern zugeordneten Radgeschwindigkeitssensoren 8 beispielsweise an das Bremssteuergerät 4 der Bremseinrichtung ausgesteuert werden. Solche Radgeschwindigkeitssensoren 8 sind im Rahmen einer Gleitschutzregelung des Schienenfahrzeugs bereits ohnehin vorhanden.

In dem Bremssteuergerät 4 wird dann der erfasste (Stillstands-) Bremsweg mit einem für die Stillstands-Bremsung erwarteten und gespeicherten Bremsweg verglichen. Weiterhin wird abhängig von einem Überschreiten einer vorgegebenen Abweichung zwischen dem bei der Stillstands-Bremsung erfassten Bremsweg und dem bei der Stillstands-Bremsung erwarteten Bremsweg wenigstens für die auf die Stillstands-Bremsung nachfolgende Fahrt des Schienenfahrzeugs die Fahrgeschwindigkeit auf eine vorgegebene Höchstgeschwindigkeit beschränkt.

Dies kann beispielsweise durch entsprechende, von dem Bremssteuergerät 4 in das Antriebssteuergerät 6 der Antriebsmaschine des Schienenfahrzeugs eingesteuerte Befehle durchgeführt werden. Die beschränkte Höchstgeschwindigkeit ist niedriger als eine von dem Schienenfahrzeug maximal erzielbare Höchstgeschwindigkeit oder als eine für die vom Schienenfahrzeug gerade befahrene Strecke geltende Höchstgeschwindigkeit.

Durch die beispielsweise temporäre Beschränkung der Höchstgeschwindigkeit auf die vorgegebene Höchstgeschwindigkeit erhalten die Bremsenbauteile der Reibungsbremse wie Bremsscheiben und Bremsbeläge ausreichend Zeit, wieder abzukühlen und vor der nächsten Bremsung wieder ein normales Temperaturniveau zu erreichen.

Der Wert der beispielsweise temporär vorgegebenen Höchstgeschwindigkeit des Fahrzeugs kann beispielsweise von der Abweichung des erfassten Bremswegs vom erwarteten Bremsweg abhängen, wobei diese Abhängigkeit beispielsweise in einem Kennfeld abgelegt ist. Weitere Einflussfaktoren auf die beschränkte Höchstgeschwindigkeit können auch die Beladung des Schienenfahrzeugs sowie der weitere Streckenverlauf (Gefälle, Ebene oder Steigung) sein.

Weiterhin kann der für die Stillstands-Bremsung erwartete Bremsweg abhängig von Fahrdaten und/oder Fahrzeugdaten wie von der unmittelbar vor der Stillstands-Bremsung vorliegenden Fahrzeuggeschwindigkeit und/oder vom Fahrzeuggewicht kennfeldartig festgelegt werden.

Bevorzugt erfolgt die Beschränkung der Fahrgeschwindigkeit auf die vorgegebene Höchstgeschwindigkeit nur während einer vorgegebenen Zeitspanne, also vorübergehend oder temporär.

Die Anzahl der erfolgten Beschränkungen der Fahrgeschwindigkeit des Schienenfahrzeugs wird als Datensatz in einem auslesbaren Speicher 10 beispielsweise des Bremssteuergeräts 4 der Bremseinrichtung gespeichert, wobei dieser Datensatz aus dem Speicher 10 z.B. anlässlich einer Wartung des Fahrzeugs auslesbar ist.

Gemäß einer weiteren Ausführungsform erfolgt die Begrenzung der Fahrgeschwindigkeit nicht automatisch, d.h. durch entsprechende elektrische Signale des Bremssteuergeräts 4, sondern durch den Fahrzeugführer bzw. Treibwagenführer auf ein optisches und/oder akustisches Signal hin. Dieses Signal wird beispielsweise vom Bremssteuergerät 4 gesetzt und an eine hier nicht gezeigte Signalwiedergabeeinrichtung zur Wiedergabe eingesteuert. Dieses Signal für den Fahrzeugführer wird vorzugsweise nur solange gesetzt, wie die Begrenzung der Höchstgeschwindigkeit auf die vorgegebene Höchstgeschwindigkeit notwendig ist, um die Belastung der Reibungsbremse bei einer neuerlichen Bremsung mit der Reibungsbremse auf ein bestimmtes Maß zu bringen bzw. herabzusetzen. Die Anzahl von erfolgtem Setzen eines solchen Signals kann dann ebenfalls als Datensatz in dem auslesbaren Speicher 10 des Bremssteuergeräts 4 der Bremseinrichtung gespeichert und bedarfsweise ausgelesen werden.

### Bezuqszahlenliste

- 1: Reibungsbremse
- 2: Brems- und Antriebseinrichtung
- 4: Bremssteuergerät
- 6: Antriebssteuergerät
- 8: Radgeschwindigkeitssensor
- 10: Speicher

## Patentansprüche

1. Verfahren zum Steuern einer eine Reibungsbremse aufweisenden Antriebs- und Bremseinrichtung eines Fahrzeugs, bei welchem bei einer bis in den Stillstand des Fahrzeugs und unter zumindest teilweisem Einsatz der Reibungsbremse erfolgten Stillstands-Bremsung der bei dieser Stillstands-Bremsung zurückgelegte Bremsweg erfasst wird, **dadurch gekennzeichnet, dass** der erfasste Bremsweg mit einem für diese Stillstands-Bremsung erwarteten Bremsweg verglichen wird, wobei abhängig von einem Überschreiten einer vorgegebenen Abweichung zwischen dem bei dieser Stillstands-Bremsung erfassten Bremsweg und dem bei dieser Stillstands-Bremsung erwarteten Bremsweg wenigstens für die auf die Stillstands-Bremsung nachfolgende Fahrt des Fahrzeugs die Fahrgeschwindigkeit auf eine vorgegebene Höchstgeschwindigkeit automatisch beschränkt wird, wobei die vorgegebene Höchstgeschwindigkeit niedriger als eine von dem Fahrzeug maximal erzielbare Höchstgeschwindigkeit oder als eine für die befahrene Strecke geltende Höchstgeschwindigkeit ist.

2. Verfahren nach Anspruch 1, **dadurch gekennzeichnet, dass** die Beschränkung der Fahrgeschwindigkeit auf die vorgegebene Höchstgeschwindigkeit nur während einer vorgegebenen Zeitspanne erfolgt.

3. Verfahren nach Anspruch 1 oder 2, **dadurch gekennzeichnet, dass** die Anzahl von erfolgten Beschränkungen der Fahrgeschwindigkeit des Fahrzeugs auf die vorgegebene Höchstgeschwindigkeit oder von erfolgtem Setzen des Signals für den Fahrzeugführer als Datensatz in einem auslesbaren Speicher (10) gespeichert wird.

4. Verfahren nach Anspruch 3, **dadurch gekennzeichnet, dass** der Datensatz aus dem Speicher (10) anlässlich einer Wartung des Fahrzeugs ausgelesen wird.

5. Verfahren nach einem der vorhergehenden Ansprüche, **dadurch gekennzeichnet, dass** der für die Stillstands-Bremsung erwartete Bremsweg abhängig von Fahrdaten und/oder Fahrzeugdaten wie von der unmittelbar vor der Stillstands-Bremsung vorliegenden Fahrzeuggeschwindigkeit und/oder vom Fahrzeuggewicht in einem Speicher kennfeldartig abgelegt wird.

6. Verfahren nach einem der vorhergehenden Ansprüche, zum Steuern einer wenigstens eine Reibungsbremse aufweisenden Antriebs- und Bremseinrichtung eines Schienenfahrzeugs.

7. Verfahren nach Anspruch 6, **dadurch gekennzeichnet, dass** die Stillstands-Bremsung eine Notbremsung oder Schnellbremsung des Schienenfahrzeugs ist.

8. Verfahren nach Anspruch 6 oder 7, **dadurch gekennzeichnet, dass** für gleitschutzgeregelte Notbremsungen oder gleitschutzgeregelte Schnellbremsungen keine Beschränkung der Höchstgeschwindigkeit durchgeführt wird.

9. Eine Reibungsbremse aufweisende Antriebs- und Bremseinrichtung eines Fahrzeugs, mit
a) Erfassungs-Mitteln (8) zur Erfassung des bei einer bis in den Stillstand des Fahrzeugs und unter zumindest teilweisem Einsatz der Reibungsbremse erfolgten Stillstands-Bremsung zurückgelegten Bremswegs, **gekennzeichnet durch**
b) Steuer-Mittel (4, 6) zum Vergleichen des erfassten, bei der Stillstands-Bremsung zurückgelegten Bremswegs mit einem für diese Stillstands-Bremsung erwarteten Bremsweg und zum Berechnen einer Abweichung zwischen dem bei der Stillstands-Bremsung erfassten Bremsweg und dem bei der Stillstands-Bremsung erwarteten Bremsweg, wobei
c) die Steuer-Mittel (4, 6) ausgebildet sind, dass sie abhängig von einem Überschreiten einer vorgegebenen Abweichung zwischen dem bei der Stillstands-Bremsung erfassten Bremsweg und dem bei der Stillstands-Bremsung erwarteten Bremsweg wenigstens für die auf die Stillstands-Bremsung nachfolgende Fahrt des Fahrzeugs die Fahrgeschwindigkeit auf eine vorgegebene Höchstgeschwindigkeit automatisch beschränken, wobei die vorgegebene Höchstgeschwindigkeit niedriger als eine von dem Fahrzeug maximal erzielbare Höchstgeschwindigkeit oder als eine für die befahrene Strecke geltende Höchstgeschwindigkeit ist.

10. Einrichtung nach Anspruch 9, **dadurch gekennzeichnet, dass** die Erfassungs-Mittel (8) wenigstens einen Radgeschwindigkeitssensor beinhalten.

11. Einrichtung nach Anspruch 9 oder 10, **dadurch gekennzeichnet, dass** die Steuer-Mittel (4, 6) wenigstens ein elektronisches Steuergerät der Antriebs- und Bremseinrichtung beinhalten.

## Claims

1. A method for controlling a drive and brake device of a vehicle having a friction brake in which the stopping distance covered during braking to a complete stop is recorded when the vehicle is braked to a complete stop using the friction brake at least partially, **characterised in that** the stopping distance recorded is compared with a stopping distance expected for such braking to a complete stop, the driving speed being automatically limited to a predetermined top speed if a predetermined deviation between the stopping distance recorded during braking to a complete stop and the stopping distance expected for braking to a complete stop is exceeded, the predetermined top speed being lower than a maximum speed achievable by the vehicle or a top speed applicable for the route covered.

2. A method according to claim 1, **characterised in that** the driving speed is limited to the predetermined top speed for a predetermined period of time only.

3. A method according to claim 1 or 2, **characterised in that** the number of times the driving speed of the vehicle is limited to the predetermined top speed or the signal is set for the vehicle driver is stored as a data set in a readable memory 10.

4. A method according to claim 3, **characterised in that** the data set is retrieved from the memory 10 when the vehicle is serviced.

5. A method according to any of the preceding claims, **characterised in that** the stopping distance expected for braking to a complete stop is stored in a memory in the form of a characteristic map dependent on driving data and/or vehicle data such as the vehicle speed immediately before braking to a complete stop and/or the vehicle weight.

6. A method according to any of the preceding claims for controlling a drive and brake device of a rail vehicle having at least one friction brake.

7. A method according to claim 6, **characterised in that** the braking to a complete stop is the emergency braking or fast braking of a rail vehicle.

8. A method according to claim 6 or 7, **characterised in that** there is no top speed limitation for wheel slide protection-regulated emergency braking or wheel slide protection-regulated fast braking.

9. A drive and brake device of a vehicle having a friction brake comprising
a) recording means 8 for recording the stopping distance covered during braking to a complete stop using the friction brake at least partially, **characterised by**:
b) control means 4, 6 for comparing the recorded stopping distance covered during braking to a complete stop with an expected stopping distance for such braking to a complete stop and for calculating a deviation between the stopping distance recorded during braking to a complete stop and the stopping distance expected for braking to a complete stop,
c) the control means 4, 6 being designed such that it automatically limits the driving speed to a predetermined top speed, at least for the vehicle journey following braking to a complete stop, if a predetermined deviation between the stopping distance recorded during braking to a complete stop and the stopping distance expected for braking to a complete stop is exceeded, the predetermined top speed being lower than a maximum speed achievable by the vehicle or a top speed applicable for the route covered.

10. A device according to claim 9, **characterised in that** the recording means 8 contains at least one wheel speed sensor.

11. A device according to claim 9 or 10, **characterised in that** the control means 4, 6 contain at least one electronic control device of the drive and brake device.

## Revendications

1. Procédé de commande d'un dispositif d'entraînement et de frein, ayant un frein à friction, d'un véhicule, dans lequel on détecte, pour un freinage d'arrêt effectué jusqu'à l'arrêt du véhicule et avec utilisation au moins en partie du frein à friction, le trajet de frein parcouru dans ce freinage d'arrêt, **caractérisé en ce que** l'on compare le trajet de frein détecté à un trajet de frein escompté pour ce freinage d'arrêt, dans lequel, en fonction d'un dépassement d'un écart donné à l'avance entre le trajet de frein détecté dans ce freinage d'arrêt et le trajet de frein escompté dans ce freinage d'arrêt, on limite automatiquement, au moins pour le déplacement du véhicule suivant ce freinage d'arrêt, la vitesse de déplacement à une vitesse plus petite qu'une vitesse la plus grande donnée à l'avance, la vitesse la plus grande donnée à l'avance pouvant être atteinte au maximum par le véhicule, ou qu'une vitesse la plus grande valant pour la voie parcourue.

2. Procédé suivant la revendication 1, **caractérisé en ce que** la limitation de la vitesse de déplacement à la vitesse la plus grande donnée à l'avance n'a lieu que pendant un laps de temps donné à l'avance.

3. Procédé suivant la revendication 1 ou 2, **caractérisé en ce que** l'on mémorise, comme jeu de données dans une mémoire (10) déchiffrable, le nombre de limitations effectuées de la vitesse de déplacement du véhicule à la vitesse la plus grande donnée à l'avance ou d'envois du signal effectués pour le conducteur du véhicule.

4. Procédé suivant la revendication 3, **caractérisé en ce que** l'on lit le jeu de données dans la mémoire (10) à l'occasion d'un entretien du véhicule.

5. Procédé suivant l'une des revendications précédentes, **caractérisé en ce que** l'on mémorise, sous forme de courbe dans une mémoire, le trajet de frein escompté pour le freinage d'arrêt en fonction de données de marche et/ou de données du véhicule, comme de la vitesse du véhicule juste avant le freinage d'arrêt et/ou du poids du véhicule.

6. Procédé suivant l'une des revendications précédentes, pour commander un dispositif d'entraînement et de frein, ayant au moins un frein à friction, d'un véhicule ferroviaire.

7. Procédé suivant la revendication 6, **caractérisé en ce que** le freinage d'arrêt est un freinage d'urgence ou un freinage rapide du véhicule ferroviaire.

8. Procédé suivant la revendication 6 ou 7, **caractérisé en ce que**, pour des freinages d'urgence régulés en antidérapage ou des freinages rapides régulés en antidérapage, on n'effectue pas de limitation de la vitesse la plus grande.

9. Dispositif d'entraînement et de freinage, ayant un frein à friction, d'un véhicule, comprenant
a) des moyens (8) de détection pour détecter le trajet de frein parcouru jusqu'à l'arrêt du véhicule et produit avec utilisation, au moins partielle, du frein de friction,
**caractérisé par**
b) des moyens (4, 6) de commande pour comparer le trajet de frein détecté et parcouru lors du freinage d'arrêt à un trajet de frein escompté pour ce freinage d'arrêt et pour calculer un écart entre le trajet de frein détecté lors du freinage d'arrêt et le trajet de frein escompté lors du freinage d'arrêt, dans lequel
c) les moyens (4, 6) de commande sont constitués de manière à limiter automatiquement, en fonction d'un dépassement d'un écart donné à l'avance entre le trajet de frein détecté lors du freinage d'arrêt et le trajet de frein escompté lors du freinage d'arrêt, au moins pour le déplacement du véhicule suivant le freinage d'arrêt, la vitesse de déplacement à une vitesse la plus grande donnée à l'avance, la vitesse la plus grande donnée à l'avance étant plus petite qu'une vitesse la plus grande pouvant être atteinte au maximum par le véhicule ou une vitesse la plus grande valable pour la voie parcourue.

10. Dispositif suivant la revendication 9, **caractérisé en ce que** les moyens (8) de détection comportent au moins un capteur de la vitesse d'une roue.

11. Dispositif suivant la revendication 9 ou 10, **caractérisé en ce que** les moyens (4, 6) de commande comportent au moins un appareil électronique de commande du dispositif d'entraînement et de freinage.
